(19) Europäisches Patentamt
European Patent Office
Office européen des brevets

(11) Veröffentlichungsnummer : **0 149 209**
**B1**

(12) # EUROPÄISCHE PATENTSCHRIFT

(45) Veröffentlichungstag der Patentschrift : **02.03.88**

(51) Int. Cl.⁴ : **C 09 K 19/42**, G 02 F 1/13

(21) Anmeldenummer : **84116077.3**

(22) Anmeldetag : **21.12.84**

(54) **Flüssigkristall-Phase.**

(30) Priorität : **17.01.84 DE 3401338**

(43) Veröffentlichungstag der Anmeldung : **24.07.85 Patentblatt 85/30**

(45) Bekanntmachung des Hinweises auf die Patenterteilung : **02.03.88 Patentblatt 88/09**

(84) Benannte Vertragsstaaten : **CH DE FR GB LI**

(56) Entgegenhaltungen :
**US-A- 4 333 709**
**PHIL. TRANS. R. SOC. LOND., Ser. A, 309, 3. Juni 1983 S. CHANDRASEKHAR "Liquid crystals of disk-like molecules" Seiten 93-103**
**JOURNAL DE CHIMIE PHYSIQUE ET DE PHYSICO-CHIMIE BIOLOGIQUE, 80, No. 1, Jänner 1983 C. DESTRADE et al. "Molecules discoides et polymorphisme mesomorphe" Seiten 137-148**
**JOURNAL DE CHIMIE PHYSIQUE ET DE PHYSICO-CHIMIE BIOLOGIQUE, 80, No. 1, Jänner 1983 A.M. LEVELUT "Structures des phases mesomorphes formées de molécules discoides" Seiten 149-161**

(73) Patentinhaber : **Merck Patent Gesellschaft mit beschränkter Haftung**
**Frankfurter Strasse 250**
**D-6100 Darmstadt (DE)**

(72) Erfinder : **Scheuble, Bernhard, Dr.**
**Am Grenzweg 18**
**D-6146 Alsbach (DE)**
Erfinder : **Eidenschink, Rudolf, Dr.**
**Kornblumenstrasse 1**
**D-6115 Münster (DE)**
Erfinder : **Weber, Georg**
**Wilhelm Leuschner-Strasse 38**
**D-6106 Erzhausen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 149 209 B1

## Beschreibung

Die Erfindung betrifft nematische Flüssigkristall-Phasen mit mindestens einer flüssigkristallinen Verbindung, die mindestens eine diskotische Phase aufweist, zur Verwendung für Flüssigkristall-Anzeigeelemente.

Flüssigkristall-Phasen sind von großer Bedeutung für Flüssigkristall-Anzeigeelemente, insbesondere als Dielektrika für elektrooptische Anzeigeelemente, die beispielsweise auf dem Prinzip der verdrillten Zelle (TN-Zelle), dem Guest-Host-Effekt, dem Effekt der Deformation aufgerichteter Phasen oder dem Effekt der dynamischen Streuung beruhen. Flüssigkristall-Anzeigeelemente für größen Informationsfluß wie er beispielsweise im Bürobereich, der Datenverarbeitung (u. a. graphischen Darstellungen an Computerterminals) und im Fernsehen anfällt, gewinnen zunehmend an Bedeutung. Die Informationsdichte wird hierbei durch die Multiplexierbarkeit des Flüssigkristall-Displays beschränkt. Man benötigt daher elektrooptische Effekte mit einer starken Nichtlinearität der elektrooptischen Charakteristik. Am häufigsten wird derzeit das Prinzip der verdrillten Zelle benutzt. Die Technologie für die TN-Zelle ist am weitesten ausgereift. Theoretische Rechnungen und experimentelle Untersuchungen haben nun gezeigt, daß die Steilheit der Transmissionskennlinie einer TN-Zelle ganz wesentlich von den elastischen Konstanten der benutzten Flüssigkristall-Phase abhängt.

Zur Realisierung einer sehr steilen Transmissionskennlinie für eine TN-Zelle muß insbesondere das Verhältnis der elastischen Konstanten für die Biegung und die Spreizung $K_3/K_1$ möglichst klein sein (siehe z. B. D.W. Berreman, Nonemissive Electrooptic Displays, Plenum, New York, 1976 S. 9 ff, insbesondere S. 23 ; G. Baur, The Physics and Chemistry of Liquid Crystal Devices, Plenum, New York, 1980, S. 61 ; B.S. Scheuble und G. Baur, 11. Freiburger Arbeitstagung Flüssigkristalle, Freiburg 1981, 8).

Auf welche Weise sich ein kleine Verhältnis $K_3/K_1$ nematischer Flüssigkristall-Phasen erzielen läßt, wird z. B. in « B.S. Scheuble und G. Baur, Proceedings of Japan Display '83, Kobe, Japan 1983 S. 224 » diskutiert.

Aufgabe der vorliegenden Erfindung war es nun, neue Flüssigkristall-Phasen für Flüssigkristall-Anzeigeelemente mit hoher Multiplexierbarkeit aufzufinden.

Es wurde nun gefunden, daß die erfindungsgemäßen Flüssigkristall-Phasen vorzüglich für Displays mit hohen Multiplexraten geeignet sind.

Gegenstand der Erfindung sind somit nematische Flüssigkristall-Phasen, die mindestens eine flüssigkristalline Verbindung, die mindestens eine diskotische Phase aufweist, und mindestens eine nematische Verbindung der Formel I enthält

$$R'—L—G—E—R'' \qquad (I)$$

worin L und R je ein carbo- und heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | —CH=CH— | —N(O)=N— |
| | —CH=CY— | —CH=N(O)— |
| | —C≡C— | $—CH_2—CH_2—$ |
| | —CO—O— | $—CH_2—O—$ |
| | —CO—S— | $—CH_2—S—$ |
| | —CH=N— | —COO—Phe—COO— |

oder eine C-C-Einfachbindung, Y Halogen, vorzugsweise Chlor, oder —CN, und R' und R" Alkyl, Alkoxy, Alkanoyloxy oder Alkoxycarbonyloxy mit bis zu 18, vorzugsweise bis zu 12 Kohlenstoffatomen, oder einer dieser Reste auch CN, NC, $NO_2$, $CF_3$, F, Cl oder Br bedeuten, insbesondere zur Verbesserung der Multiplexeigenschaften sowie Flüssigkristall-Anzeigeelemente, insbesondere elektrooptische Anzeigeelemente, die solche Phasen enthalten.

Weiterhin ist Gegenstand der Erfindung die Verwendung flüssigkristalliner diskotischer Verbindungen als Komponenten nematischer Flüssigkristall-Phasen.

Die erfindungsgemäße Flüssigkristall-Phase enthält mindestens eine flüssigkristalline Verbindung, die mindestens eine diskotische Phase aufweist. Diskotische Flüssigkristalle wurden in der Literatur schon vielfach beschrieben, z. B.

J. Billard in W. Helfrich und G. Heppke (Hrsg.) « Liquid Crystals of One- and Two-Dimensional Order », S. 383-395 Springer Verlag, Berlin, Heidelberg, New York (1980) ; S. Chandrasekhar, Phil. Trans. R. Soc. Lond., Ser. A., 309, (1983), 93-103 S. Chandrasekhar, Mol. Cryst. Liq. Cryst. 63, (1981), 171 ; S. Chandrasekhar, Adv. Liq. Cryst. 5 (1982), 47-78 C. Destrade, N.H. Tinh, H. Gasparoux, J. Malthete, A.M. Levelut, Mol. Cryst. Liq. Cryst. 71, (1981), 111 ; C. Destrade, H. Gasparoux, P. Foucher, N.H. Tinh, J. Malthete, J. Jacques, J. Chim. Phys. Phys-Chim. Biol. 80 (1) (1983), 137-148 A.M. Levelut, J. Chim. Phys. Phys-Chim. Biol. 80, (1) (1983), 149-161.

Diskotische Flüssigkristalle haben eine scheibchenförmige Molekülstruktur und unterschiedlich gebaute starre, ebene Zentren (z. B. Aromaten wie Benzolderivate, z. B. der Formel A) (z. B. S. Chandrasekhar, Liq. Cryst., Proc. Int. Conf., Heyden, London, S. 41-51, 79 (1980) ; DE-OS 33 32 955 ; S. Chandrasekhar, B.K. Sadashiva, K.A. Suresh, Pramana 9 (1977), 471 ; S. Chandrasekhar et al., J. d. Phys. 40 (1979), C3-120), Triphenylenderivate, z. B. der Formel B (z. B. C. Destrade, M.C. Mondon und J. Malthete, J. de Phys. 40 (1979), C3-17 ; EP-OS 30 879) oder Truxene, z. B. der Formel C (z. B. C. Destrade, J. Malthete, N.H. Tinh, H. Gasparoux, Phys. Lett. A., 78A (1980), 82 ; L. Mamlok, J. Malthete, N.H. Tinh, C. Destrade, A.M. Levelut, J. Phys. Lett. 43 (1982), L-641), gesättigte Ringe wie Cyclohexanderivate, z. B. der Formel D (z. B. B. Kohne und K. Praefcke, 21. Bunsen-Colloquium, TU Berlin, Sept./Okt. 1983 ; DE-OS 33 32 955) oder durch H-Brücken gebildete gesättigte Hetero-Ringsysteme (z. B. J.D. Bunning, J.E. Lydon, C. Eaborn, P.M. Jackson, J.W. Goodby, G.W. Gray, J. Chem. Soc., Faraday Trans. I, 78 (1982), 713 ; oder Organometallderivate (z. B. FR-OS 24 86 946).

Diese Zentren tragen zumeist flexible Seitengruppen X. Besonders bevorzugt sind diskotische Flüssigkristalle mit 3 bis 6, insbesondere mit 5 oder 6, Seitengruppen X. Daneben bevorzugt sind jedoch auch diskotische Flüssigkristalle mit einem Zentrum aus mehreren Ringen (z. B. Formel B oder C) mit weniger als drei Seitengruppen X, insbesondere mit nur einer Seitengruppe X.

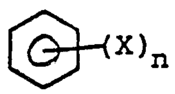

(A)

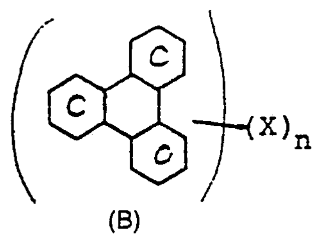

(B)

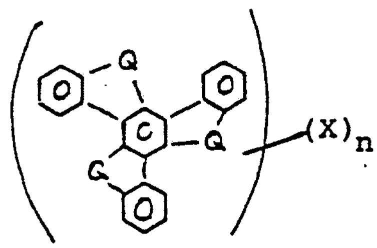

(C)

(n = 1 - 6)

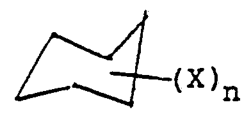

(D)

Die obigen Formeln sollen die Strukturen diskotischer Flüssigkristalle lediglich erläutern, ohne sie zu begrenzen. Falls die Verbindungen der Formeln (A) und (D) nur 3 bzw. 4 Substituenten X tragen, sind diese vorzugsweise in 1,3,5-Position bzw. in 1,2,4,5-Position. Die Substituenten X in Verbindungen der Formel (B) sind vorzugsweise in 2,3,6,7,10 und/oder 11-Position.

Die Substituenten X in Verbindungen der Formel C sind vorzugsweise in para-Stellung zu Q und/oder in der dem inneren Ring abgewandten m-Stellung zu Q. Q ist vorzugsweise —O— oder —$CH_2$—.

Die Substituenten X in Verbindungen der Formel D sind vorzugsweise in equatorialen Positionen.

Die Gruppen X können gleich oder verschieden sein. Vorzugsweise sind sie jedoch gleich und werden ausgewählt aus der Gruppe —R, —OR, —COR, —OCOR, —COOR, —SR, —SOR und —$SO_2$R.

Die Reste R bedeuten geradkettige oder verzweigte Alkylreste, in denen auch eine (« Oxaalkyl ») oder zwei (« Dioxaalkyl ») nicht endständige $CH_2$-Gruppen durch O-Atome ersetzt sein können.

Vorzugsweise sind sie geradkettig, haben 2, 3, 4, 5, 6, 7, 8, 9, 10, 11 oder 12 C-Atome und bedeuten demnach bevorzugt Ethyl, Propyl, Butyl, Pentyl, Hexyl, Heptyl, Octyl, Nonyl, Decyl, Undecyl, Dodecyl, 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7-, 8- oder 9-Oxadecyl, 2-, 3-, 4-, 5-, 6-, 7-, 8-, 9-, 10- oder 11-Oxadodecyl, ferner Tridecyl, Tetradecyl, Pentadecyl, Hexadecyl, Heptadecyl oder Octadecyl. Besonders bevorzugt sind geradkettige Alkylreste R mit 8 bis 12 C-Atomen.

Besonders bevorzugt Gruppe X sind —OR, —OCOR, —COOR, —SR, —SOR und —$SO_2$R.

Die erfindungsgemäßen nematischen Flüssigkristall-Phasen enthalten etwa 0,1 bis 30 %, vorzugsweise 5 bis 10 %, einer oder mehrerer diskotischer Verbindungen.

Die weiteren Bestandteile der erfindungsgemäßen Flüssigkristall-Phase können höchst unterschiedlich sein. Dem Fachmann stehen aus dem Stand der Technik Flüssigkristallverbindungen in großer Vielfalt zur Verfügung. Sie können nach Routinemethoden ausgewählt werden. Normalerweise werden 2 bis 15, vorzugsweise 3 bis 12 Komponenten verwendet, die vorzugsweise ausgewählt werden aus den nematischen oder nematogenen Substanzen, insbesondere den bekannten Substanzen, aus den Klassen

der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis-cyclohexylbenzole, 4,4'-Bis-cyclohexylbiphenyle, Phenyl- oder Cyclohexylpyrimidine, Phenyl- oder Cyclohexyldioxane, gegebenenfalls halogenierten Stilbene, Benzylphenylether, Tolane, substituierten Zimtsäuren, Phenyl- oder Cyclohexyl-1,3-dithiane, 1,2-Biscyclohexylethane, 1-Phenyl-2-Cyclohexyl-ethane und 1,2-Bis-phenylethane.

Die wichtigsten als weitere Bestandteile erfindungsgemäßer Flüssigkristall-Phasen in Frage kommenden Verbindungen lassen sich durch die Formel I charakterisieren,

$$R'—L—G—E—R'' \qquad (I)$$

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

| G | | |
|---|---|---|
| | —CH=CH— | —N(O)=N— |
| | —CH=CY— | —CH=N(O)— |
| | —C≡C— | $—CH_2—CH_2—$ |
| | —CO—O— | $—CH_2—O—$ |
| | —CO—S— | $—CH_2—S—$ |
| | —CH=N— | —COO—Phe—COO— |

oder eine C-C-Einfachbindung, Y Halogen, vorzugsweise Chlor, oder —CN, und R' und R'' Alkyl, Alkoxy, Alkanoyloxy oder Alkoxycarbonyloxy mit bis zu 18, vorzugsweise bis zu 12 Kohlenstoffatomen, oder einer dieser Reste auch CN, NC, $NO_2$, $CF_3$, F, Cl oder Br bedeuten.

Bei den meisten dieser Verbindungen sind R' und R'' voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die Herstellung der erfindungsgemäßen Phasen erfolgt in an sich üblicher Weise. In der Regel werden die Komponenten ineinander gelöst, zweckmäßig bei erhöhter Temperatur.

Die erfindungsgemäßen Phasen können weiterhin durch Zusätze modifiziert werden. Derartige Zusätze sind beim Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Kronenethern (vgl. z. B. I. Haller et al., Mol. Cryst. Liq. Cryst. Band 24, Seiten 249-258 (1973)) zur Verbesserung der Leitfähigkeit, dichroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden. Derartige Substanzen sind z. B. in den DE-OS 2 209 127, 2 240 864, 2 321 632, 2 338 281, 2 450 088, 2 637 430, 2 853 728 und 2 902 177 beschrieben.

Die folgenden Beispiele sollen die Erfindung erläutern, ohne sie zu begrenzen. Vor- und nachstehend bedeuten Prozentangaben Gewichtsprozent ; alle Temperaturen sind in Grad Celsius angegeben.

## Beispiel 1

Eine flüssigkristalline Phase aus

22 % p-trans-4-Propylcyclohexylbenzonitril,
19 % p-trans-4-Butylcyclohexylbenzonitril,
30 % p-trans-4-Pentylcyclohexylbenzonitril,
15 % 4-Cyan-4'-(trans-4-pentylcyclohexyl)-biphenyl und
14 % 4-p-Cyanphenyl-4'-pentyl-biphenyl

hat bei 41° ein Verhältnis $K_3/K_1$ von 1,97. Ein Zusatz von 15 % 2-Ethyltriphenylen zu obigem Gemisch erniedrigt $K_3/K_1$ signifikant auf einen Wert von 1,37.

## Beispiel 2

Die flüssigkristalline Phase aus Beispiel 1 hat bei 55° ein Verhältnis $K_3/K_1$ von 1,83. Ein Zusatz von 15 % 2-Ethyltriphenylen erniedrigt $K_3/K_1$ signifikant auf einen Wert von 1,30.

## Beispiel 3

Eine flüssigkristalline Phase aus

14 % p-trans-4-Propylcyclohexylbenzonitril,
10 % p-trans-4-Butylcyclohexylbenzonitril,
20 % p-trans-4-Pentylcyclohexylbenzonitril,
14 % trans-1-p-Ethylphenyl-4-propylcyclohexan,
20 % 4-Ethyl-4'-(trans-4-pentylcyclohexyl)-biphenyl,
4 % 4-Cyan-4'-(trans-4-pentylcyclohexyl)-biphenyl,
13 % 4-(trans-4-Pentylcyclohexyl)-4'-(trans-4-propylcyclohexyl)-biphenyl und
5 % Hexakis-(hexylsulfonyl)-benzol

hat einen Klärpunkt von 75°.

Beispiel 4

Eine flüssigkristalline Phase aus

11 % p-trans-4-Propylcyclohexylbenzonitril,
21 % p-trans-4-Butylcyclohexylbenzonitril,
12 % 4-Ethyl-4'-cyanbiphenyl,
9 % 4-Butyl-4'-cyanbiphenyl,
13 % trans-4-Propylcyclohexancarbonsäure-(p-ethoxyphenylester),
14 % trans-4-Pentylcyclohexancarbonsäure-(p-methoxyphenylester),
10 % 4-(trans-4-Pentylcyclohexyl)-4'-(trans-4-propylcyclohexyl)-biphenyl,
5 % 4-Cyan-4'-(trans-4-pentylcyclohexyl)-biphenyl und
5 % Hexa-O-decanoyl-scyllo-inosit

hat einen Klärpunkt von 60°.

**Patentansprüche**

1. Nematische Flüssigkristall-Phase, dadurch gekennzeichnet, daß sie mindestens eine flüssigkristalline Verbindung, die mindestens eine diskotische Phase aufweist, und mindestens eine nematische Verbindung der Formel I enthält

$$R'—L—G—E—R'' \qquad (I)$$

worin L und E je ein carbo- und heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | |
|---|---|
| G —CH=CH— | —N(O)=N— |
| —CH=CY— | —CH=N(O)— |
| —C≡C— | $—CH_2—CH_2—$ |
| —CO—O— | $—CH_2—O—$ |
| —CO—S— | $—CH_2—S—$ |
| —CH=N— | —COO—Phe—COO— |

oder eine C-C-Einfachbindung, Y Halogen, vorzugsweise Chlor, oder —CN, und R' und R'' Alkyl, Alkoxy, Alkanoyloxy oder Alkoxycarbonyloxy mit bis zu 18, vorzugsweise bis zu 12 Kohlenstoffatomen, oder einer dieser Reste auch CN, NC, $NO_2$, $CF_3$, F, Cl oder Br bedeuten.

2. Verwendung flüssigkristalliner Verbindungen, die mindestens eine diskotische Phase aufweisen, als Komponenten nematischer Flüssigkristall-Phasen.

3. Flüssigkristall-Anzeigeelement, dadurch gekennzeichnet, daß es eine nematische Flüssigkristall-Phase nach Anspruch 1 enthält.

4. Elektrooptisches Anzeigeelement nach Anspruch 3, dadurch gekennzeichnet, daß es als Dielektrikum eine Flüssigkristall-Phase nach Anspruch 1 enthält.

**Claims**

1. Nematic liquid crystal phase, characterised in that it contains at least one liquid-crystalline compound which exhibits at least one discotic phase and at least one nematic compound of formula I

R′—L—G—E—R″ (I)

wherein L and E are each a carbocyclic or heterocyclic ring system from the group comprising 1,4-disubstituted benzene and cyclohexane rings, 4,4′-disubstituted biphenyl, phenylcyclohexane and cyclohexylcyclohexane systems, 2,5-disubstituted pyrimidine and 1,3-dioxane rings, 2,6-disubstituted naphthalene, di- and tetra-hydronaphthalene, quinazoline and tetrahydroquinazoline, G is

—CH=CH—
—CH=CY—
—C≡C—
—CO—O—
—CO—S—
—CH=N—
—N(O)=N—
—CH=N(O)—
—CH$_2$—CH$_2$—
—CH$_2$—O—
—CH$_2$—S—
—COO—Phe—COO—

or a C-C single bond, Y is halogen, preferably chlorine, or —CN, and R′ and R″ are alkyl, alkoxy, alkanoyloxy or alkoxycarbonyloxy each having up to 18, preferably up to 12, carbon atoms, or one of these radicals can also be CN, NC, $NO_2$, $CF_3$, F, Cl or Br.

2. Use of liquid-crystalline compounds, which exhibit at least one discotic phase, as components of nematic liquid crystal phases.

3. Liquid crystal display element, characterised in that it contains a nematic liquid crystal phase according to Claim 1.

4. Electro-optic display element according to Claim 3, characterised in that it contains, as the dielectric, a liquid crystal phase according to Claim 1.

**Revendications**

1. Phase nématique de cristal liquide, caractérisée en ce qu'elle comporte au moins un composé cristallin liquide présentant au moins une phase discotique, et d'un composé nématique de la formule I

R′—L—G—E—R″ (I)

dans laquelle représentent L et E toujours un système carbocyclique et hétérocyclique formé par un groupe d'anneaux 1,4-bisubstitués de benzène ou de cyclohexane, 4,4′-bisubstitués de systèmes biphényl-, phénylcyclohexane-, et cyclohexylcyclohexane, d'anneaux 2,5-bisubstitués de pyrimidine- et 1,3-dioxane, de naphtalène 2,6 bisubstitués, di- et tetrahydronaphtalène, chinazoline et tetrahydrochinazoline,

G représente

—CH=CH—
—CH=CY—
—C≡C—
—CO—O—
—CO—S—
—CH=N—
—N(O)=N—
—CH=N(O)—
—CH$_2$—CH$_2$—
—CH$_2$—O—
—CH$_2$—S—
—COO—Phe—COO—

ou une liaison simple C-C, Y halogène, de préférence chlore, ou —CN, et R′ et R″ représentent un reste alcoyl, alcoxy, alcanoyloxy ou alcoxycarbonyloxy avec jusqu'à 18, de préférence jusqu'à 12 atomes de carbone, ou bien que seulement un de ces restes représente aussi CN, NC, $NO_2$, $CF_3$, F, Cl ou Br.

2. Emploi de composés cristallins liquides, qui présentent au moins une phase discotique, comme composants de phases nématiques de cristaux liquides.

3. Elément indicateur cristallin liquide, caractérisé en ce qu'il comprend une phase nématique cristalline liquide selon la revendication 1.

4. Elément indicateur électro-optique selon la revendication 3, caractérisé en ce qu'il comprend comme diélectrique une phase cristalline liquide selon la revendication 1.